(19)

Europäisches
Patentamt
European
Patent Office
Office européen
des brevets

(11) **EP 3 750 706 A1**

(12) **EUROPEAN PATENT APPLICATION**

(43) Date of publication:
**16.12.2020 Bulletin 2020/51**

(51) Int Cl.:
**B32B 7/027** (2019.01)   **B29C 70/20** (2006.01)
**B32B 27/36** (2006.01)   **B32B 3/08** (2006.01)
**B32B 3/12** (2006.01)   **B32B 5/12** (2006.01)
**B32B 5/26** (2006.01)   **H05K 5/00** (2006.01)

(21) Application number: **19179260.5**

(22) Date of filing: **10.06.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
 • **MUHAMMAD, Kashif Syed**
   **4612 PX Bergen op Zoom (NL)**

 • **YALDIZ, Recep**
   **4612 PX Bergen op Zoom (NL)**
 • **SHI, Huajie**
   **4612 PX Bergen op Zoom (NL)**
 • **VERLAEK, Roel**
   **4612 PX Bergen op Zoom (NL)**
 • **RIETMAN, Albert Dirk**
   **4612 PX Bergen op Zoom (NL)**

(74) Representative: **J A Kemp LLP**
**14 South Square**
**Gray's Inn**
**London WC1R 5JJ (GB)**

(54) **PORTABLE ELECTRONIC DEVICE HOUSINGS COMPRISING AN ASYMMETRIC FIBER-REINFORCED LAMINATE AND A SIDEWALL INCLUDING A POLYMERIC BODY AND METHODS OF MAKING THE SAME**

(57)   A portable electronic device housing comprises a plate and a sidewall. The plate can define a front major surface, a back major surface, and a periphery, and can be formed of an asymmetric laminate comprising two or more laminae. At least one of the laminae can include a plurality of continuous fibers dispersed within a polymeric matrix material. The sidewall can comprise a polymeric body coupled to the plate with the polymeric body extending along at least a majority of the periphery of the plate and extending away from the back major surface of the plate in a direction opposite the front major surface.

**FIG. 1A**

**Description**

**TECHNICAL FIELD**

The present invention relates generally to portable electronic device housings and, more specifically, to portable electronic device housings that comprise an asymmetric fiber-reinforced laminate and a sidewall including a polymeric body.

**BACKGROUND**

Fiber-reinforced composites can be used to form structures having advantageous structural characteristics, such as high strengths and high stiffnesses, as well as relatively low weights, when compared to structures formed from conventional materials. As a result, fiber-reinforced composites are used in a wide variety of applications across a wide range of industries, including the automotive, aerospace, and consumer electronics industries.

Fiber-reinforced laminates are typically symmetric, rather than asymmetric, meaning that the laminae of the laminate are arranged such that an effective coefficient of thermal expansion (CTE) $\alpha_l$ of the laminate is equal across the midplane thereof. This is because in conventional laminate-forming processes the laminate is typically heated and cooled; for an asymmetric laminate having a CTE that varies across the midplane, such heating and cooling can induce residual stresses that tend to warp the laminate. As such, asymmetric laminates are generally not flat, making them difficult to handle in subsequent processes. Symmetric laminates may not experience these warpage-inducing stresses during the laminate-forming process and, thus, are generally preferred.

Portable electronic device housings can include a polymeric sidewall that is coupled to a plate. To form such a sidewall, the plate and a polymeric material are typically heated such that the polymeric material can be molded onto the plate and set to form the sidewall. When setting the polymeric material, the plate and the polymeric material are typically cooled, which can cause both the polymeric material and the plate to shrink. The polymeric material and the plate may shrink by different amounts if they have different CTEs which-similar to what can occur when cooling an asymmetric laminate-can yield residual stresses that can warp the plate: an undesirable result. Further, polymeric materials suitable for such molding typically have higher CTEs than fiber-reinforced laminates, meaning that a symmetric laminate can be warped when a polymeric sidewall is molded thereon, even if such a laminate may not experience warpage during the laminate-forming process and even if the laminate is pressed during the molding process.

**SUMMARY**

There is a need in the art for portable electronic device housings that include a fiber-reinforced laminate-which can impart a high strength and a high stiffness to the housing-that is not warped. To address this need in the art, some of the present portable electronic device housings can comprise a plate that is an asymmetric laminate having two or more laminae, at least one of which comprises fibers dispersed within a polymeric matrix material. Within such a laminate, the laminae can be arranged such that at least one of (e.g., at least two of) an effective lengthwise CTE ($\alpha_{l,x}$), an effective widthwise CTE ($\alpha_{l,y}$), and an effective shear CTE ($\alpha_{l,xy}$) of the laminate is higher at a front major surface of the laminate than at an opposing back major surface thereof. Two or more such laminae can comprise one or more first laminae (e.g., a single first lamina) comprising a polymeric matrix material with little or no fibers dispersed therein, and one or more second laminae comprising a plurality of fibers dispersed in a polymeric matrix material, where one of the first lamina(e) defines the front major surface and each of the second lamina(e) is disposed closer to the back major surface than are the first lamina(e). A portable electronic device housing can comprise a sidewall including a polymeric body that is disposed along at least a majority of a periphery of the laminate and extends away from the back major surface of the plate in a direction opposite the front major surface. As a result, when the polymeric body is molded onto the laminate and cooled, the residual stresses that may be attributed to the CTE mismatch between the polymeric body and the laminate can be at least partially counteracted by the residual stresses that may be attributed to the laminate's CTE, which can vary across the midplane thereof. This can mitigate warpage of the laminate.

Such an asymmetric laminate can be flat before the polymeric body of the sidewall is molded thereon, due at least in part to the method by which the laminate is made. For example, the laminae can be stacked and, when the stack of laminae is cooled, heat can be transferred through the front major surface at a first rate and heat can be transferred through the back major surface at a second rate that is less than or equal to 90% of the first rate. Such asymmetric cooling can induce residual stresses that at least partially counteract those attributable to the asymmetric configuration of laminae, thereby mitigating warpage. Additionally or alternatively, the stack can be disposed between first and second supportive bodies such that the first supportive body contacts the front major surface and the second supportive body contacts the back major surface, wherein the first supportive body has a CTE that is less than or equal to 90% of a CTE of the second supportive body. As a result, during cooling, the second supportive body may shrink more than the first supportive body, which can also at least partially counteract stresses attributable to the asymmetric configuration of laminae. In this manner, the asymmetric laminate can be flat and suitable for use in the portable electronic device housing.

Some of the present portable electronic device housings comprise a plate defining a front major surface, a back major surface opposite the front major surface, and a periphery. Some housings include a sidewall comprising a polymeric body that is coupled to the plate with the polymeric body disposed along at least a majority of the periphery of the plate and extending away from the back major surface of the plate in a direction opposite the front major surface. Some of the present methods of making a portable electronic device housing comprise disposing a plate within a mold, the plate defining a front major surface, a back major surface opposite the front major surface, and a periphery. Some methods comprise injecting a polymeric material into the mold such that the polymeric material defines a body that is coupled to the plate with the body disposed along at least a majority of the periphery of the plate and extending away from the back major surface of the plate in a direction opposite the front major surface.

The plate, in some embodiments, is formed of an asymmetric laminate comprising two or more laminae. In some embodiments, the laminate has a width and a length and at least one of an effective lengthwise coefficient of thermal expansion (CTE), an effective widthwise CTE, and an effective shear CTE-optionally the effective lengthwise and widthwise CTEs-of the laminate is higher at the front major surface than at the back major surface. In some embodiments, an effective shear CTE of the laminate is substantially the same at the front and back major surfaces.

In some embodiments, at least one of the laminae includes a plurality of fibers dispersed within a polymeric matrix material. Optionally, the two or more laminae include one or more first laminae, wherein at least 90%, by weight, of each of the first lamina(e) is a polymeric matrix material, and one or more second laminae, each comprising a plurality of fibers dispersed within a polymeric matrix material. In some embodiments, one of the first lamina(e) defines the front major surface of the plate. In some of such embodiments, the one or more first laminae are a single first lamina and/or the lamina(e) that are disposed between the first lamina and the back major surface of the plate are the second lamina(e). In some embodiments, a thickness of each of the first lamina(e) is greater than or equal to 50 $\mu$m and/or the polymeric matrix material of each of the first lamina(e) comprises polycarbonate. In some embodiments, the portable electronic device housing is a laptop A cover.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" and "approximately" may be substituted with "within [a percentage] of' what is specified, where the percentage includes 0.1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above, and others are described below.


**BRIEF DESCRIPTION OF THE DRAWINGS**


The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.

**FIGs. 1A** and **1B** are lower and upper views, respectively, of an example portable electronic device housing that comprises an asymmetric laminate plate and a sidewall comprising a polymeric body.

**FIG. 1C** is a cross-sectional view of the portable electronic device housing of FIG. 1A, taken along line 1C-1C of FIG. 1A.

**FIG. 2** is an exploded view of the asymmetric laminate plate of the portable electronic device housing of FIG. 1A.

**FIG. 3** illustrates an example procedure by which the effective coefficient of thermal expansion of a laminate ($\alpha_l$) can be determined.

**FIG. 4** is a perspective view of a laptop housing that includes a portable electronic device housing of the present disclosure.

**FIG. 5A** illustrates stacking of two or more laminae according to various example methods.

**FIG. 5B** is a side view of a stack of the laminae of FIG. 5A disposed between first and second supportive bodies that have different CTEs.

**FIG. 5C** is a side view of the stack of the laminae of FIG. 5A being consolidated in a press while disposed between the first and second supportive bodies.

**FIGs. 6A** and **6B** are cross-sectional views of a mold that can be used in some of the present methods to form a polymeric body of a sidewall that is coupled to the laminate.

**FIGs. 7A-7C** are contour plots of the deflection of three modeled portable electronic device housings calculated for a simulated cooling in which the temperature of the housing decreased from 120 °C to 25 °C. Each of the modeled housings comprised a laminate plate and a sidewall including a polymeric body. The laminate modeled in FIG. 7A was symmetric and the laminates modeled in FIGs. 7B and 7C were asymmetric.

## DETAILED DESCRIPTION

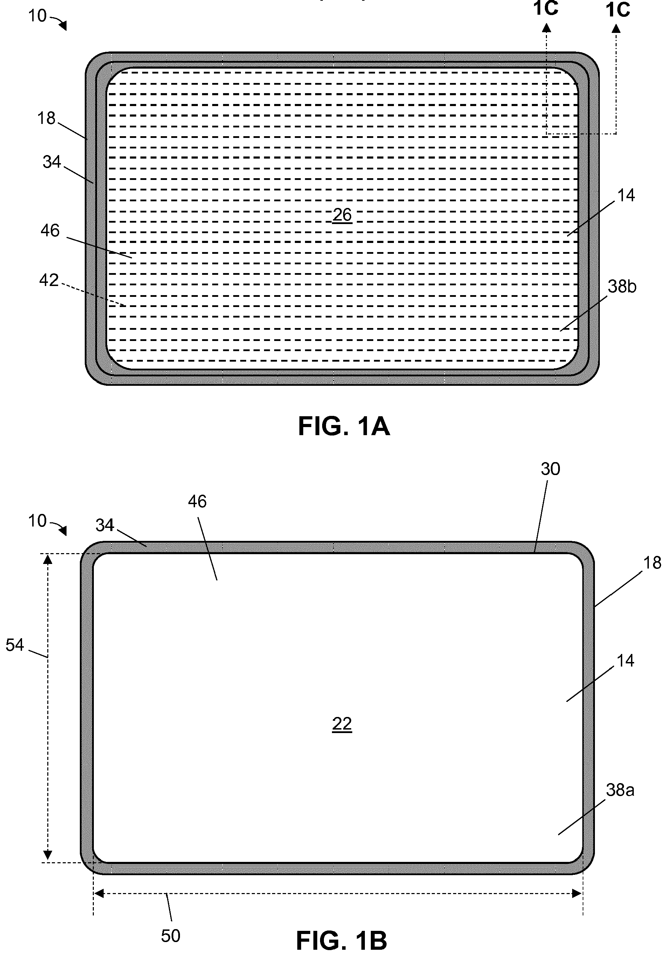

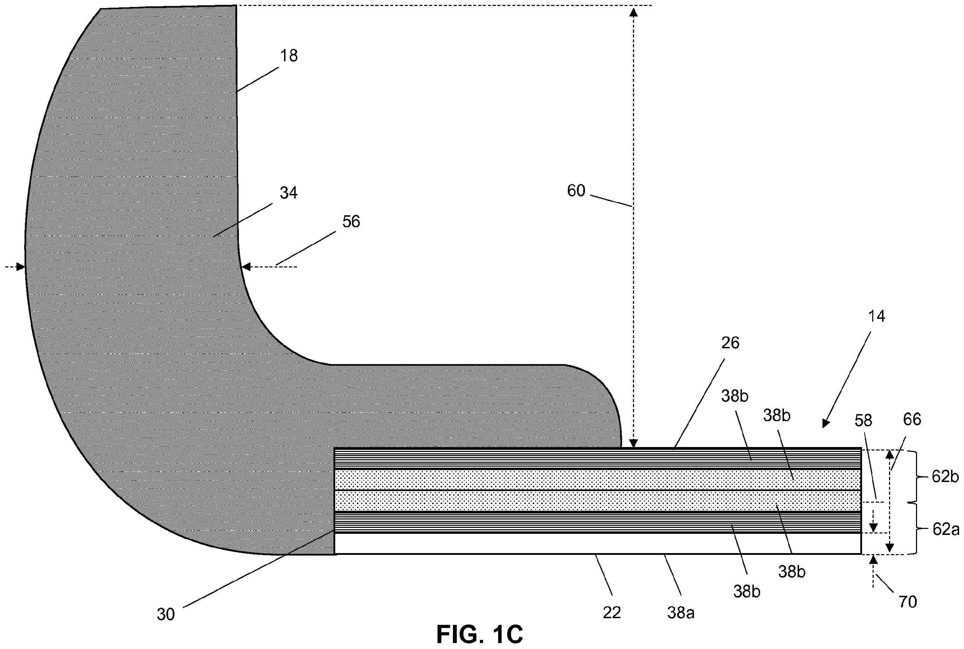

Referring to FIGs. 1A-1C, shown is a portable electronic device housing 10 that can comprise a plate 14 and a sidewall 18. Plate 14 can define opposing front and back major surfaces 22 and 26, respectively, and an edge 30 extending between the front and back major surfaces. Sidewall 18 can comprise a polymeric body 34-which can comprise one or more pieces that may or may not contact one another-that is connected to plate 14 such that the polymeric body is disposed along at least a majority (up to and including all) of a periphery of the plate and extends away from back major surface 26 of the plate in a direction opposite front major surface 22 (e.g., such that at least a portion of the polymeric body is disposed on the back major surface). That polymeric body 34 can be so disposed whether it contacts plate 14 on front major surface 22, back major surface 26, and/or edge 30, and whether it is a single-piece polymeric body (e.g., as shown) or a multi-piece polymeric body (e.g., in which two or more pieces thereof collectively are disposed along at least a majority of the periphery). Housing 10 can define a cavity configured to receive electronic components of a portable electronic device, such as a logic board, processors (e.g., one or more CPUs, microcontrollers, field effect gate arrays, and/or the like), system memory, data storage devices (e.g., solid state or hard drive), speakers, wireless modems, antennas, batteries, an electronic display, and/or the like. Such components can be secured within housing 10 using any suitable means, such as, for example, screws, clips, rivets, and/or adhesive (e.g., a curable polymer adhesive). Thermally-conductive paste or grease can be disposed between an electronic component and housing 10. A cover (e.g., a clear glass or polymeric cover through which an electronic display of the portable electronic device can be viewed) can be attached to housing 10 and enclose the cavity (e.g., with fasteners such as screws, clips, or rivets, or with an adhesive such as a curable polymer adhesive) with electronic components disposed in the cavity.

Plate 14 can be formed of a laminate, which can be lightweight and promote stiffness for housing 10 to protect components received therein. Laminate 14 can comprise two or more laminae, such as, for example, greater than or equal to any one of, or between any two of, 2, 3, 4, 5, 6, 7, 8, 9, 10, or more laminae, and at least one of the laminae can comprise fibers dispersed within a matrix material. To illustrate, laminate 14 can comprise one or more first laminae 38a, each comprising a polymeric matrix material 46 with little or no fibers dispersed therein (e.g., such that at least 90%, by weight, of the lamina is due to the matrix material) (e.g., a sheet or film of the matrix material), and one or more second laminae 38b, each comprising fibers 42 (e.g., continuous fibers) dispersed within a polymeric matrix material 46. In other embodiments, however, laminate 14 need not include first lamina(e) 38a; in other words, each of the laminae can include fibers.

Fibers 42 of any of second lamina(e) 38b can include any suitable fibers, such as, for example, glass fibers, carbon fibers, aramid fibers, polyethylene fibers, polyester fibers, polyamide fibers, ceramic fibers, basalt fibers, steel fibers, and/or the like. Provided by way of illustration, at least one of (up to and including each of) second lamina(e) 38b can have a pre-consolidation fiber volume fraction that is greater than or equal to any one of, or between any two of: 40%, 45%, 50%, 55%, 60%, 65%, 70%, 75%, or 80%. And matrix material 46 of any of the laminae-including first and second laminae 38a and 38b, respectively-can be a thermoplastic or thermoset material. Suitable thermoplastic matrix materials include, for example, polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. Suitable thermoset matrix materials include, for example, an unsaturated polyester resin, a polyurethane, bakelite, duroplast, urea-formaldehyde, diallyl-phthalate, epoxy resin, an epoxy vinylester, a polyimide, a cyanate ester of a polycyanurate, dicyclopentadiene, a phenolic, a benzoxazine, a co-polymer thereof, or a blend thereof. Laminate 14 can have a sufficiently high RF-transparency (e.g., at least in part due to the fiber and matrix material composition of its laminae) to permit transmission of signals to and/or from the electronic device through the laminate.

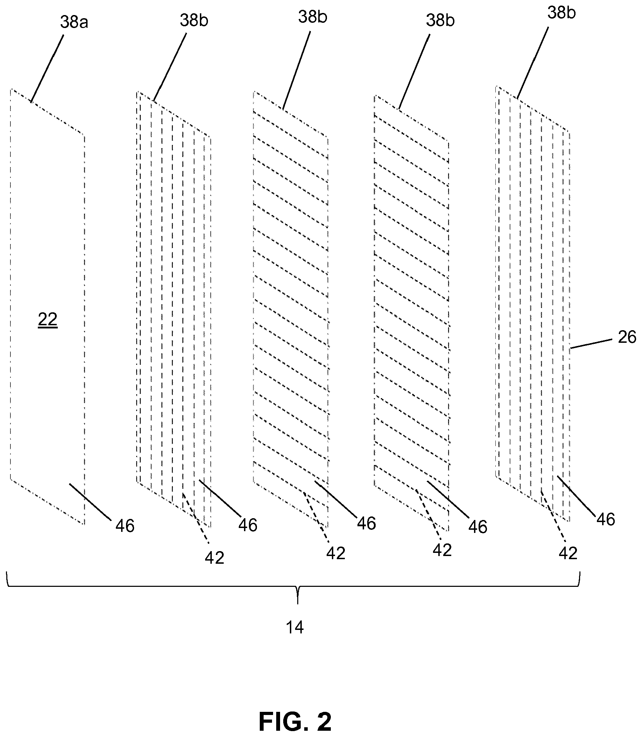

For each of second lamina(e) 38b, fibers 42 can be arranged in any suitable configuration. For example, and referring additionally to FIG. 2, the lamina can be a unidirectional lamina (e.g., a unidirectional tape) in which substantially all of the fibers are aligned with a single direction. As used herein, "aligned with" means within 10 degrees of parallel to. For further example, the lamina can be a woven lamina, such as one in which continuous fibers are arranged in a plane, twill, satin, basket, leno, mock leno, or the like weave. For yet further example, the lamina can be a non-woven lamina (e.g., dry-laid, wet-laid, spunmelt, or the like), in which the fibers are multi-directional, arranged in a sheet or web, and connected to one another via entanglement and/or thermal and/or chemical bonds rather than in a weave or knit.

Further, for any of second lamina(e) 38b (that are not non-woven), fibers 42 can be aligned with any suitable direction(s) (hereinafter, "fiber direction(s)"). Provided by way of illustration, laminate 14 can have a length 50 measured in a first direction, and a width 54 measured in a second direction that is perpendicular to the first direction (FIGs. 1B). At least some of the fibers can be aligned with length 50 and/or at least some of the fibers can be aligned with width 54. If the lamina is a unidirectional lamina, in the former instance it is a 0-degree unidirectional lamina, and in the latter instance it is a 90-degree unidirectional lamina. Alternatively or additionally, at least some of the fibers can be aligned with a direction that is angularly disposed relative to each of length 50 and width 54; such a lamina can be characterized as an off-axis lamina. To illustrate, a smallest angle between a direction in which at least some of the fibers are aligned and length 50 can be equal to any one of, or between any two of: 5°, 10°, 15°, 20°, 25°, 30°, 35°, 40°, 45°, 50°, 55°, 60°, 65°, 70°, 75°, 80°, 85°, or more (e.g., 45 degrees). As shown, laminate 14 includes a single first lamina 38a and four second laminae 38b: two 90-degree unidirectional laminae disposed between two 0-degree unidirectional laminae.

Some laminates can include one or more laminae comprising foam (e.g., open- or closed-cell), a honeycomb structure, and/or the like. Such laminates can be, for example, skin-core, ABA, sandwich, and/or the like laminates.

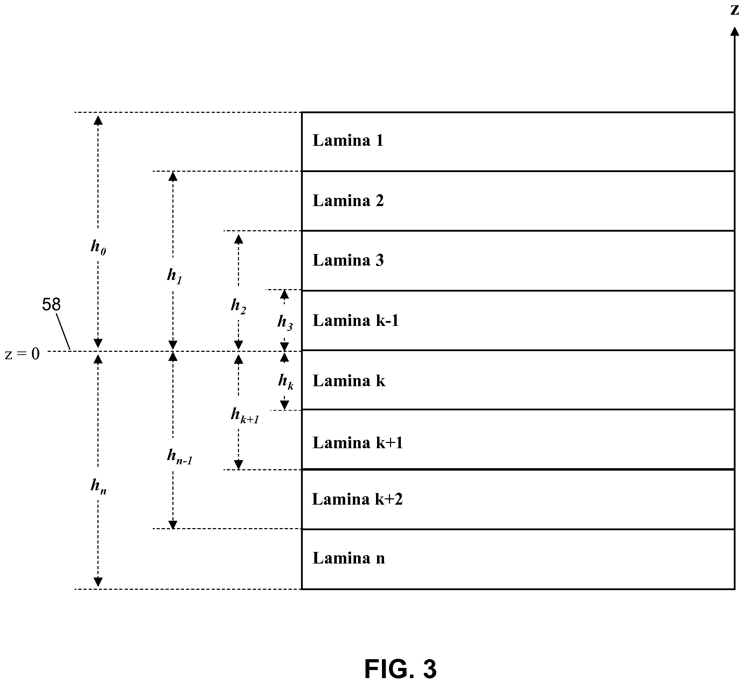

The laminae can be arranged such that laminate 14 is asymmetric which, as discussed in further detail below, can mitigate warpage when housing 10 is manufactured. An asymmetric laminate is one in which the arrangement and pre-consolidation properties of the laminae render the laminate susceptible to warpage when the temperature of the laminate changes, e.g., one in which an effective coefficient of thermal expansion (CTE) $(\alpha_l)$ of the laminate is not equal across the midplane thereof. Referring to FIG. 3, that effective CTE can be expressed as:

$$\alpha_l = \begin{bmatrix} \alpha_{l,x} \\ \alpha_{l,y} \\ \alpha_{l,xy} \end{bmatrix} = \frac{1}{\Delta T}(\varepsilon^0 + z\mathbf{k}) \tag{1}$$

where z is the distance from midplane 58 of the laminate and $\varepsilon^0$ and $\mathbf{k}$ are the midplane strain and curvature vectors, respectively, for a change in temperature $\Delta T$:

$$\frac{1}{\Delta T}\begin{bmatrix} \varepsilon^0 \\ \mathbf{k} \end{bmatrix} = \begin{bmatrix} \mathbf{A} & \mathbf{B} \\ \mathbf{B} & \mathbf{D} \end{bmatrix}^{-1}\left(\frac{1}{\Delta T}\begin{bmatrix} \mathbf{N} \\ \mathbf{M} \end{bmatrix}\right) \tag{2}$$

As reflected in Eq. (1), $\alpha_l$ can vary across the thickness of the laminate (e.g., in the z-direction), and the effective lengthwise CTE $(\alpha_{l,x})$ can be different from the effective widthwise CTE $(\alpha_{l,y})$ and/or the effective shear CTE $(\alpha_{l,xy})$ (e.g., due to the anisotropy of the fiber-reinforced lamina(e)). An effective z-direction CTE $(\alpha_{l,z})$ can also vary across the thickness of an asymmetric laminate. In Eq. (2), as calculated based on pre-consolidation properties of the laminae, **A** is the extensional stiffness matrix of the laminate:

$$\mathbf{A} = \sum_{k=1}^{n} \overline{\mathbf{Q}}_{\mathbf{k}}(h_k - h_{k-1}) \tag{3}$$

**B** is the coupling stiffness matrix of the laminate:

$$\mathbf{B} = \frac{1}{2}\sum_{k=1}^{n}\overline{\mathbf{Q}}_k(h_k^2 - h_{k-1}^2) \tag{4}$$

**D** is the bending stiffness of the laminate:

$$\mathbf{D} = \frac{1}{3}\sum_{k=1}^{n}\overline{\mathbf{Q}}_k(h_k^3 - h_{k-1}^3) \tag{5}$$

and **N** and **M** are thermal stress and moment resultants, respectively, for the change in temperature ΔT:

$$\frac{\mathbf{N}}{\Delta T} = \sum_{k=1}^{n}\overline{\mathbf{Q}}_k\overline{\alpha}_k(h_k - h_{k-1}) \tag{6}$$

$$\frac{\mathbf{M}}{\Delta T} = \frac{1}{2}\sum_{k=1}^{n}\overline{\mathbf{Q}}_k\overline{\alpha}_k(h_k^2 - h_{k-1}^2) \tag{7}$$

FIG. 3 illustrates the manner in which these relationships can be determined for a laminate having n laminae. In Eqs. (3)-(7), for the kth lamina, $\overline{\mathbf{Q}}_k$ is the lamina's transformed stiffness matrix, $\overline{\alpha}_k$ is the lamina's transformed CTE vector, and $h_k$ and $h_{k-1}$ are the distances between the geometric midplane of the laminate and the lamina's lower and upper surfaces, respectively. The coordinate system used in these relationships can be chosen such that the length (e.g., 50) of the laminate is in the x-direction (e.g., the first direction), and the width of the laminate (e.g., 54) is in the y-direction (e.g., the second direction). The transformed stiffness matrix $\overline{\mathbf{Q}}_k$ and transformed CTE vector $\overline{\alpha}_k$ express the stiffness and CTEs, respectively, of the lamina in this x-y reference frame. For an anisotropic lamina (e.g., one of second lamina(e) 38b) whose properties are known with respect to different coordinates (e.g., with respect to the fiber direction and a direction transverse to the fiber direction, when the lamina is a 90-degree or off-axis unidirectional lamina), the known $\mathbf{Q}_k$ and $\alpha_k$ can be transformed to determine $\overline{\mathbf{Q}}_k$ and $\overline{\alpha}_k$:

$$\overline{\mathbf{Q}}_k = \mathbf{T}^{-1}\mathbf{Q}_k\mathbf{RT} \tag{8}$$

$$\overline{\alpha}_k = \begin{bmatrix}\alpha_x \\ \alpha_y \\ \alpha_{xy}\end{bmatrix}_k = \mathbf{RT}^{-1}\mathbf{R}^{-1}\alpha_k \tag{9}$$

where **R** is the Reuter's matrix:

$$\mathbf{R} = \begin{bmatrix}1 & 0 & 0 \\ 0 & 1 & 0 \\ 0 & 0 & 2\end{bmatrix} \tag{10}$$

and **T** is the transformation matrix for a transformation angle θ (e.g., the angle between the fiber direction and the x-axis):

$$\mathbf{T} = \begin{bmatrix} \cos^2\theta & \sin^2\theta & 2\sin\theta\cos\theta \\ \sin^2\theta & \cos^2\theta & -2\sin\theta\cos\theta \\ -\sin\theta\cos\theta & \sin\theta\cos\theta & \cos^2\theta - \sin^2\theta \end{bmatrix} \tag{11}$$

For an anisotropic lamina that is, or can be approximated as, transversely isotropic (e.g., a unidirectional lamina):

$$\mathbf{Q}_k = \begin{bmatrix} \dfrac{E_1}{1 - \nu_{12}\nu_{21}} & \dfrac{\nu_{21}E_1}{1 - \nu_{12}\nu_{21}} & 0 \\ \dfrac{\nu_{12}E_2}{1 - \nu_{12}\nu_{21}} & \dfrac{E_2}{1 - \nu_{12}\nu_{21}} & 0 \\ 0 & 0 & \dfrac{1}{G_{12}} \end{bmatrix}_k \tag{12}$$

$$\boldsymbol{\alpha}_k = \begin{bmatrix} \alpha_1 \\ \alpha_2 \\ 0 \end{bmatrix}_k \tag{13}$$

In Eqs. (12) and (13), $E_1$ and $\alpha_1$ are the lamina's pre-consolidation Young's modulus and CTE, respectively, in a longitudinal direction (e.g., the fiber direction), and $E_2$ and $\alpha_2$ are the lamina's pre-consolidation Young's modulus and CTE, respectively, in a transverse direction. The parameters $\nu_{12}$ and $\nu_{21}$ are the major and minor Poisson's ratios, respectively, and $G_{12}$ is the shear modulus. For an isotropic lamina (e.g., one of first lamina(e) 38a):

$$\overline{\mathbf{Q}}_k = \mathbf{Q}_k = \left( \frac{E}{1 - \nu^2} \begin{bmatrix} 1 & \nu & 0 \\ \nu & 1 & 0 \\ 0 & 0 & \dfrac{1-\nu}{2} \end{bmatrix} \right)_k \tag{14}$$

$$\overline{\boldsymbol{\alpha}}_k = \boldsymbol{\alpha}_k = \begin{bmatrix} \alpha \\ \alpha \\ 0 \end{bmatrix}_k \tag{15}$$

An asymmetric laminate can, in response to a change in temperature $\Delta T$, have thermal stresses that are not equal and/or thermal moments that are not equal and opposite across the midplane, e.g.:

$$\mathbf{N}_1 \neq \mathbf{N}_2 \text{ and/or } \mathbf{M}_1 \neq -\mathbf{M}_2 \tag{16}$$

where $\mathbf{N}_1$ and $\mathbf{N}_2$ are the thermal stress resultants of the laminate's upper and lower halves, respectively, and $\mathbf{M}_1$ and $\mathbf{M}_2$ are the thermal moment resultants of the laminate's upper and lower halves, respectively. Per the relationships expressed in Eqs. (6) and (7), and where the *ith* lamina is the lamina immediately below the midplane (e.g., the lamina labeled "Lamina k" in FIG. 3):

$$\frac{\mathbf{N}_1}{\Delta T} = \sum_{k=1}^{i-1} \overline{\mathbf{Q}}_k \overline{\boldsymbol{\alpha}}_k (h_k - h_{k-1}) \tag{17}$$

$$\frac{\mathbf{N_2}}{\Delta T} = \sum_{k=i}^{n} \overline{\mathbf{Q}}_k \overline{\alpha}_k (h_k - h_{k-1}) \tag{18}$$

$$\frac{\mathbf{M_1}}{\Delta T} = \frac{1}{2} \sum_{k=1}^{i-1} \overline{\mathbf{Q}}_k \overline{\alpha}_k (h_k^2 - h_{k-1}^2) \tag{19}$$

$$\frac{\mathbf{M_2}}{\Delta T} = \frac{1}{2} \sum_{k=i}^{n} \overline{\mathbf{Q}}_k \overline{\alpha}_k (h_k^2 - h_{k-1}^2) \tag{20}$$

When the midplane intersects a lamina, for the purpose of calculating Eqs. (17)-(20) the intersected lamina can be treated as two separate laminae having a boundary at the midplane, the lower of which is the *ith* lamina.

As reflected in Eqs. (1)-(20), the effective CTE $\alpha_l$ of laminate 14 can depend, at least in part, on the pre-consolidation stiffness and/or fiber alignment of each of the laminae, in addition to the CTEs thereof. Laminate 14 can have any suitable arrangement of laminae to render the laminate asymmetric, e.g., laminae (e.g., 38a and 38b) of the laminate can have different matrix materials, fiber types, thicknesses, fiber arrangements, fiber volume fractions, and/or the like (e.g., such that at least two of the laminae have different stiffnesses and/or CTEs) and can be arranged to yield an effective CTE $\alpha_l$, per Eq. (1), that is not equal across the midplane of the laminate.

To illustrate, each of first lamina(e) 38a, which can comprise little or no fibers, can have a higher CTE in at least one direction and/or can be less stiff than second lamina(e) 38b, which can comprise fibers that, optionally, are of the same type (e.g., carbon fibers). The laminae can be arranged such that each of first lamina(e) 38a is disposed closer to front major surface 22 of laminate 14 than to back major surface 26 of the laminate, optionally such that one of the first lamina(e) defines the front major surface. Additionally or alternatively, the laminae can be arranged such that each of second lamina(e) 38b is disposed closer to a back major surface 26 than is each of first lamina(e) 38a, e.g., such that when a single first lamina 38a defines front major surface 22, all of the lamina(e) that are disposed between the first lamina and the back major surface are second lamina(e) 38b. As shown, for example, laminate 14 comprises a single first lamina 38a and four unidirectional second laminae 38b, where matrix material 46 of the first lamina is polycarbonate and the laminae are arranged in a PC, 0, 90, 90, 0 lay-up. As a result, the fiber content, by weight, of an upper half 62a of laminate 14 disposed between the midplane and front major surface 22 can be less than that of a lower half 62b of the laminate disposed between the midplane and back major surface 26. Such a laminae composition and arrangement can render upper half 62a more susceptible to shrinkage than lower half 62b in response to a decrease in temperature (e.g., one or more, optionally two or more, components of $\alpha_l$ such as effective lengthwise and/or widthwise CTEs of the laminate can be higher at front major surface 22 than at back major surface 26 and, optionally, an effective shear CTE of the laminate can be substantially the same at the front and back major surfaces) and, as such, laminate 14 is asymmetric. However, in other embodiments, laminate 14 can have any other suitable asymmetric arrangement of laminae; for example, the laminae of the laminate can comprise the same fiber type and matrix material, but can have different fiber alignments that render the laminate asymmetric.

Polymeric body 34 of sidewall 18 can comprise any of the matrix materials described above (e.g., polycarbonate), which can facilitate impact absorption and promote damage resistance. Optionally, polymeric body 34 can include one or more fillers, such as talc, calcium carbonate, or a plurality of fibers. Such filler fibers can be of any of the fiber types discussed above with respect to laminate 14 (e.g., glass fibers) and can be chopped (e.g., the chopped fibers can have a length that is less than or equal to any one of, or between any two of: 3.00 mm, 2.75 mm, 2.50 mm, 2.25 mm, 2.00 mm, 1.75 mm, 1.50 mm, 1.25 mm, 1.00 mm, 0.75 mm, 0.50 mm, 0.25 mm, or less) and dispersed within the matrix material, which can strengthen the sidewall. As shown, polymeric body 34 defines all or almost all of sidewall 18 (e.g., at least 90% of the weight of the sidewall is due to the polymeric body); in other embodiments, however, the sidewall can include a rim (e.g., a single- or multi-piece rim) that extends along at least a majority of the sidewall and that comprises a metal (e.g., aluminum, steel, and/or the like) and/or a laminate. In such embodiments, polymeric body 34 can couple the rim to laminate 14 and the rim can promote stiffness and damage resistance for housing 10.

Whether or not comprising chopped fibers, polymeric body 34 can have a higher CTE than a fiber-reinforced laminate. Due to this CTE mismatch, molding polymeric body 34 onto a symmetric laminate can warp the laminate; the polymeric body and laminate may be heated during such molding and, when cooled, can experience different shrinkages to yield warpage-inducing residual stresses. The asymmetry of laminate 14 can mitigate this warpage when housing 10 is made. For example, because at least one component of laminate 14's $\alpha_l$ (e.g., the lengthwise and widthwise effective CTEs thereof) can be higher at front major surface 22 than at back major surface 26, during cooling the laminate may experience more shrinkage at the front major surface than at the back major surface to at least partially offset the greater susceptibility of polymeric body 34-which extends outwardly of the back major surface-to shrinkage. To illustrate, housing 10-by including a polymeric body 34 extending outwardly of back major surface 26 and a first lamina 38a, with little or no fibers, defining front major surface 22-can comprise relatively high CTE material at both the front and back major surfaces of the laminate 14 such that the housing experiences similar shrinkage across the midplane of the laminate when it is cooled, relative to that which would occur if the laminate were symmetric. And housing 10 can have improved aesthetics (e.g., from the appearance of a fiberless first lamina(e) 38a that defines front major surface 22, which can have better aesthetics than a fiber-reinforced lamina) without having to sacrifice laminate stiffness (e.g., which might otherwise be sacrificed when incorporating an additional fiberless lamina instead of a fiber-reinforced lamina to achieve laminate symmetry). Housing 10 can, optionally, comprise one or more additional layers coupled to laminate 14 such as, for example, a decorative film, translucent layer, and/or supportive layer.

Due at least in part to its warpage-mitigating asymmetry, laminate 14 of housing 10 can be flat. As used herein, a laminate is flat where, when the laminate is resting on a horizontal surface (e.g., such that front major surface 26 is disposed on the horizontal surface), a maximum distance between the horizontal surface and the laminate, measured in a direction perpendicular to the horizontal surface, is less than or equal to any one of, or between any two of, 1.4%, 1.3%, 1.2%, 1.1%, 1.0%, 0.9%, 0.8%, 0.7%, 0.6%, 0.5%, or less (e.g., less than or equal to 1%) the length (e.g., 50) or width (e.g., 54) of the laminate, whichever is largest.

Housing 10 can be used for any suitable portable electronic device; for example, the housing can be a mobile phone, digital assistant, pager, tablet, media player, handheld gaming device, camera, watch, navigation device, laptop, and/or the like housing. Laminate 14 can have any dimensions suitable for such portable electronic device housings. For example, laminate 14 can be relatively thin, e.g., a thickness 66 of the laminate, measured perpendicularly to both length 50 and width 54, can be less than or equal to any one of, or between any two of: 2.0 mm, 1.9 mm, 1.8 mm, 1.7 mm, 1.6 mm, 1.5 mm, 1.4 mm, 1.3 mm, 1.2 mm, 1.1 mm, 1.0 mm, 0.9 mm, 0.8 mm, 0.7 mm, 0.6 mm, 0.5 mm, or less. And a pre-consolidation thickness (e.g., corresponding to post-consolidation thickness 70) of each of the laminate's laminae (e.g., 38a and 38b) can be less than or equal to any one of, or between any two of: 0.50 mm, 0.45 mm, 0.40 mm, 0.35 mm, 0.30 mm, 0.20 mm, 0.15 mm, 0.10 mm, 0.05 mm, or less. Each of first lamina(e) 38a can have a suitable minimum thickness to mitigate warpage when polymeric body 34 is molded onto laminate 14, e.g., thickness 70 of each of the first lamina(e) can be greater than or equal to any one of, or between any two of, 30 $\mu$m, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, 150 $\mu$m, or more (e.g., greater than or equal to 50 $\mu$m or 100 $\mu$m or between 90 and 110 $\mu$m).

Length 50 and width 54 of laminate 14 can be the same or different; for example, the width can be less than or equal to any one of, or between any two of: 90%, 80%, 70%, 60%, 50%, 40%, 30%, or less of the length. And, length 50 and width 54 of laminate 14 can be any suitable length and width for the application of housing 10. For example, as shown housing 10 is a laptop A cover and length 50 can be greater than or equal to any one of, or between any two of, 250 mm, 275 mm, 300 mm, 325 mm, 350 mm, or larger and width 54 can be greater than or equal to any one of, or between any two of, 150 mm, 175 mm, 200 mm, 225 mm, 250 mm, or larger. In other embodiments, however, laminate 14 can have any length 50 and width 54 that are suitable for the portable electronic device for which housing 10 is used. Further, polymeric body 34 can have any thickness 56 and height 60 above back major surface 26 to contain and protect components received by housing 10. For example, a thickness 56 of polymeric body 34 can be greater than or equal to any one of, or between any two of, 0.5 mm, 1.0 mm, 1.5 mm, 2.0 mm, 2.5 mm, 5.0 mm, 7.5 mm, 10 mm, or larger and a height 60 of the polymeric body can be greater than or equal to any one of, or between any two of, 0.5 mm, 1.0 mm, 1.5 mm, 2.0 mm, 2.5 mm, 5.0 mm, 7.5 mm, 10 mm, 15 mm, or larger.

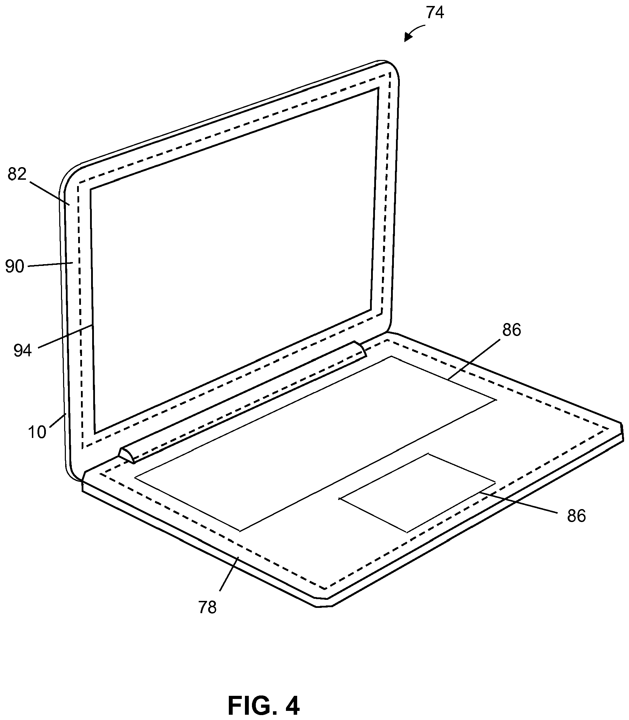

Referring to FIG. 4, shown is a schematic perspective view of a laptop housing 74 that can include one or more of the present portable electronic device housings (e.g., 10). Laptop housing 74 can include a base 78 and a lid 82 that can be movably (e.g., hingedly) coupled to the base. Each of base 78 and lid 82 can be characterized as a thin-walled shell configured to receive laptop components. For example, laptop components receivable by base 78 can include a processor, motherboard, power supply, user-input device(s) (e.g., a keyboard, touchpad, and/or the like), cooling fan(s), and/or the like. To facilitate operation of such laptop components once they are received by base 78, the base can define one or more openings 86 in communication with its interior (e.g., to allow user access to the user-input device(s), permit airflow to and/or from the cooling fan(s), allow external device(s) to be connected to the motherboard, and/or the like). Base 78 can comprise an assembly of two or more portions (e.g., an upper portion and a lower portion), to, for example, facilitate receipt of such laptop components by the base (e.g., during assembly of a laptop including the base).

Laptop components receivable by lid 82 can include a screen, user-input device(s) (e.g., a camera, microphone, and/or the like), and/or the like. For example, lid 82 can include a frame 90 defining an opening 94, where a laptop screen can be coupled to the frame such that the screen is viewable by a user through the opening. To increase the stiffness and strength of lid 82, facilitate receipt of a laptop screen by the lid, and/or for aesthetic purposes, the lid can include an A cover 10 configured to be coupled to frame 90. A cover 10 can be coupled to frame 90 in any suitable fashion, such as, for example, via interlocking features of the A cover and the frame (e.g., such as snap-fit connection(s)), fastener(s), adhesive, welding, and/or the like. In some embodiments, an A cover (e.g., 10) of a lid (e.g., 82) can be unitary with a frame (e.g., 90) of the lid.

It is desirable for a laptop housing (e.g., 74) to be sufficiently stiff to protect components received by the laptop housing against damage as well as to be relatively small (e.g., thin-walled), light, and inexpensive. Some of the present laptop housings (e.g., 74) can achieve such advantageous characteristics by including one(s) of the present portable electronic device housings (e.g., 10). For example, base 78 and/or lid 82 can comprise housing 10, including laminate plate 14 thereof. As shown, A cover 10 of lid 82 is one of the present portable electronic device housings; in other embodiments, however, base 78 can comprise one of the present portable electronic device housings as well.

Unlike conventional asymmetric laminates, and due at least in part to the method by which it is made, laminate 14 can be flat before polymeric body 34 is molded thereon. Conventional laminate-forming processes may not produce flat, asymmetric laminates because the laminate, when cooled in those processes, may experience different shrinkage across its thickness (e.g., due to an $\alpha_l$ that varies across the laminate's thickness), yielding residual stresses that can warp the laminate even if the laminate is pressed as it is cooled. For example, a residual compressive stress may be induced in portions of the laminate where one or more components of $\alpha_l$ are comparatively higher while a residual tensile stress may be induced in portions of the laminate where one or more components of $\alpha_l$ are comparatively lower, thereby causing warpage.

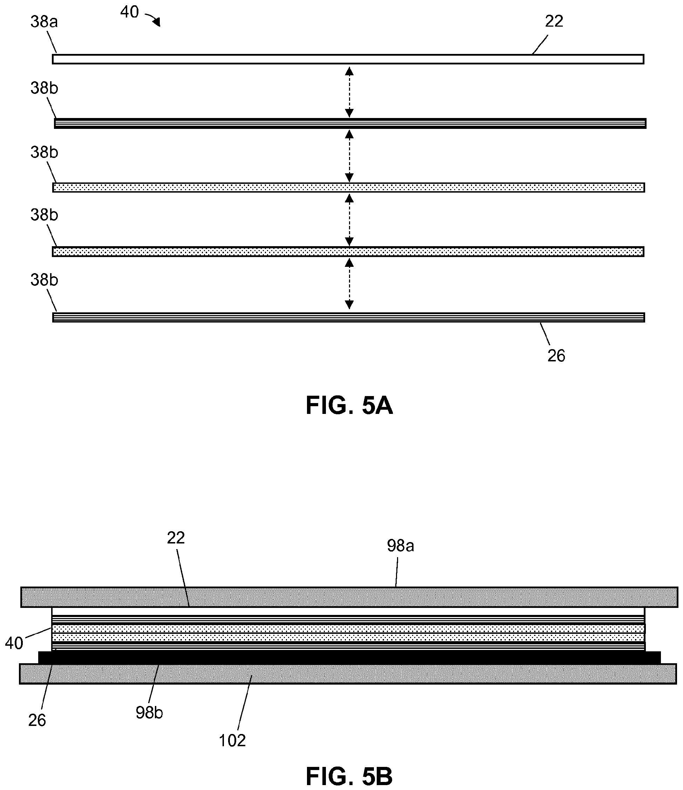

Referring to FIGs. 5A-5C, a flat, asymmetric fiber-reinforced laminate (e.g., 14) for use as a plate in some of the present portable electronic device housings (e.g., 10) can be made in a manner that mitigates the warpage-inducing stresses attributable to the asymmetric configuration of its laminae. Some methods comprise a step of stacking two or more laminae (e.g., 38a and 38b) (FIG. 5A) and consolidating the stack (e.g., 40) of laminae to produce the laminate. The stacked laminae can be any of the laminae described above (e.g., first lamina(e) 38a and second lamina(e) 38b), and at least one of the laminae can comprise fibers (e.g., 42) dispersed within a matrix material (e.g., 46). The produced laminate can have a length (e.g., 50), a width (e.g., 54), and a thickness (e.g., 66) measured perpendicular to the length and width, such as any of those described above.

The laminae can be stacked such that the laminate is asymmetric. For example, the laminae can be stacked such that an upper one of the laminae defines a front major surface (e.g., 22), a lower one of the laminae defines a back major surface (e.g., 26) opposite the front major surface, and at least one of, optionally at least two of, an effective lengthwise CTE ($\alpha_{l,x}$), an effective widthwise CTE ($\alpha_{l,y}$), and an effective shear CTE ($\alpha_{l,xy}$) of the laminate, as calculated per Eq. (1), is higher at the front major surface than at the back major surface. To illustrate, the laminae can be stacked such that effective lengthwise and widthwise CTEs of the laminate are higher at the front major surface than at the back major surface, and optionally such that an effective shear CTE of the laminate is substantially the same at the first and back major surfaces (e.g., to minimize twisting). Variations in the shear CTE of the laminate can be reduced at least by arranging the second lamina(e) in a cross-ply configuration, e.g., the one or more second laminae can comprise two or more second laminae, each of the second laminae can be a unidirectional lamina, and the laminae can be stacked and arranged such that the fibers of at least one of the second laminae are aligned in a first direction and the fibers of at least one other of the second laminae are aligned in a second direction that is perpendicular to the first direction.

The stack can be consolidated at least by heating and/or applying pressure to the stack and subsequently cooling the stack. To mitigate warpage-inducing stresses that may occur when the stack is cooled, some methods comprise a step of disposing the stack between first and second supportive bodies (e.g., 98a and 98b) (e.g., before consolidation) such that the first supportive body contacts the front major surface and the second supportive body contacts the back major surface (FIG. 5B). The supportive bodies can have different CTEs; for example, the first supportive body can have a CTE that is less than or equal to any one of, or between any two of: 90%, 80%, 70%, 60%, 50%, 40%, 30%, 20%, or less of a CTE of the second supportive body. To illustrate, the first supportive body can be a first plate, at least a majority of which is steel, and the second supportive body can be a layer of polymeric material (e.g., polytetrafluoroethylene) that, optionally, comprises fibers (e.g., glass fibers) dispersed within the polymeric material. The first supportive body (e.g., the first plate) can have a thickness that is less than or equal to any one of, or between any two of: 20.0 mm, 15.0 mm, 10.0 mm, 5.0 mm, 3.0 mm, 2.5 mm, 2.0 mm, 1.5 mm, 1.0 mm, 0.5 mm, or 0.25 mm (e.g., less than or equal to approximately 20 mm or 2.0 mm), and the second supportive body (e.g., the polymeric layer) can have a thickness that is less than or equal to any one of, or between any two of: 20.0 mm, 15.0 mm, 10.0 mm, 5.0 mm, 3.0 mm, 1.5 mm, 0.75 mm, 0.50 mm, 0.25 mm, 0.10 mm, or less (e.g., less than or equal to approximately 20 mm or 0.50 mm). A second plate (e.g., 102) can underlie the second supportive body (e.g., to facilitate pressing, described below) and can be substantially the same as the first plate. The stack can be disposed between the supportive bodies while the stack is consolidated.

At least in part because the first and second supportive body have different CTEs, during cooling the second supportive body may experience greater shrinkage than the first supportive body. As a result, the supportive bodies may induce a residual tensile stress in an upper half (e.g., 62a) of the laminate and a residual compressive stress in a lower half (e.g., 62b) of the laminate. These stresses may at least partially counteract any residual stresses (e.g., compressive and tensile stresses in the upper and lower halves of the laminate, respectively) that result from the laminate's asymmetric laminae configuration, thereby mitigating warpage.

Additionally or alternatively, the stack can be cooled asymmetrically to mitigate warpage-inducing stresses, e.g., such that the front major surface is cooled at a higher rate than the back major surface. For example, the stack can be cooled such that, during the cooling, heat is transferred through the front major surface at a first rate and heat is transferred through the back major surface at a second rate that is less than or equal to any one of, or between any two of: 90%, 80%, 70%, 60%, 50%, 40%, 30%, or less of the first rate. Such differential cooling can induce residual tensile and compressive stresses in the upper and lower halves of the laminate, respectively, to at least partially counteract warpage-inducing stresses attributable to the asymmetric laminae arrangement.

Differential cooling can be achieved in any suitable manner. For example, if the stack is cooled while it is disposed between first and second supportive bodies, the thermal diffusivity of the second supportive body can be less than that of the first supportive body (e.g., less than or equal to any one of, or between any two of: 90%, 80%, 70%, 60%, 50%, 40%, 30%, or less of the thermal diffusivity of the first supportive body). Additionally or alternatively, the stack can be placed in thermal communication with cooling bodies that are brought to different temperatures when the stack is cooled.

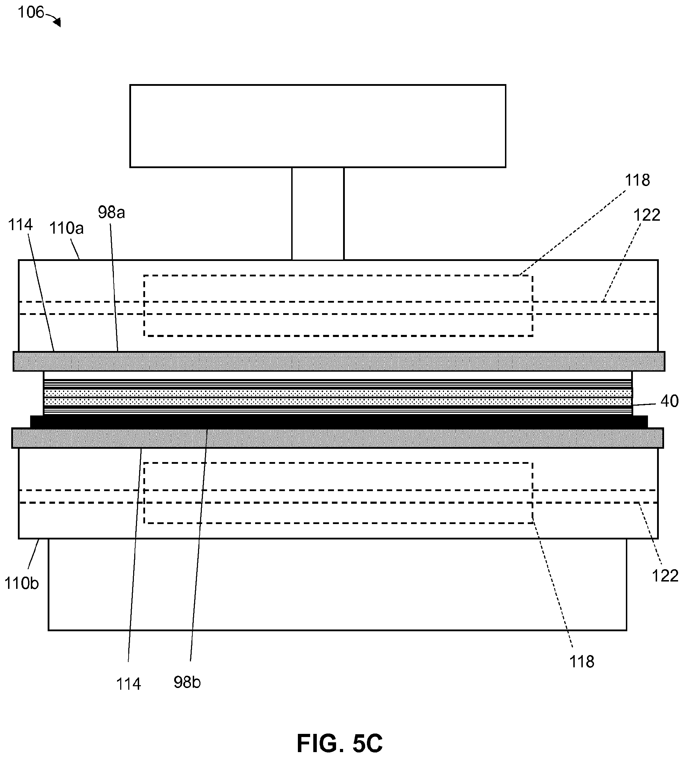

Referring to FIG. 5C, during consolidation, the stack can be pressed, heated, and/or cooled using a press (e.g., 106) that comprises first and second pressing elements (e.g., 110a and 110b). Each of the pressing elements can comprise any suitable pressing element, such as, for example, a platen, block, and/or the like, and can define a pressing surface (e.g., 114) (e.g., that can be planar, concave, and/or convex) configured to contact an object when the object is pressed by the pressing element. At least one (e.g., each) of the pressing elements can include one or more electric and/or inductive heating elements (e.g., 118) and/or one or more interior passageways (e.g., 122) through which heating and/or cooling fluid (e.g., water, steam, a thermal fluid, and/or the like) can be passed to change the temperature of the pressing element. The press can include one or more actuators (e.g., hydraulic, electric, and/or pneumatic actuator(s)) configured to move the pressing elements relative to one another to press an object disposed therebetween.

To consolidate the stack, some methods comprise pressing the stack between the first and second pressing elements (e.g., by pressing the first and second supportive bodies-if used-between the pressing elements). The second plate can underlie the second supportive body while the supportive bodies are pressed (e.g., such that the first and second plates are pressed between the first and second pressing elements) to facilitate pressing.

The stack can be heated while disposed between the pressing elements at least by increasing a temperature of at least one of the pressing elements. For example, to heat the stack, at least one of the pressing elements can be heated such that a temperature of the pressing element during the heating is greater than or equal to any one of, or between any two of: 140 °C, 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, 300 °C, 310 °C, 320 °C, 330 °C, 340 °C, 350 °C, 360 °C, 370 °C, 380 °C, 390 °C, 400 °C, or more (e.g., between 200 and 300 °C). The pressing elements can also apply pressure to the stack, such as, for example, a pressure that is greater than or equal to any one of, or between any two of: 1, 5, 10, 15, 20, 25, 30, 35, 40, or more bar gauge (e.g., between 1 and 40 or 13 and 20 bar gauge).

To cool the stack, a temperature of at least one of the pressing elements can be less than that of the heated stack, such as, for example, less than or equal to any one of, or between any two of: 10 °C, 15 °C, 20 °C, 25 °C, 30 °C, 35 °C, 40 °C, 45 °C, 50 °C, 55 °C, 60 °C, 65 °C, 70 °C, 75 °C, 80 °C, 85 °C, 90 °C, 95 °C, 100 °C, or less (e.g., between 10 and 100 °C or between 20 and 30 °C, which can be room temperature). The pressing elements can have different temperatures to asymmetrically cool the stack. For example, during the cooling, a temperature of the first pressing element can be less than or equal to any one of, or between any two of: 90%, 80%, 70%, 60%, 50%, 40%, 30%, or less of a temperature of the second pressing element (e.g., such that the rate of heat transfer is greater through the front major surface than through the back major surface). And, pressing can be performed such that the first supportive body, which can have a higher thermal diffusivity than the second supportive body, is disposed closer to the first pressing element than is the second supportive body, which may promote a faster cooling rate at the front major surface than at the back major surface. Pressing, heating, and/or cooling the stack in this manner can mitigate warpage-inducing stresses to produce a flat laminate.

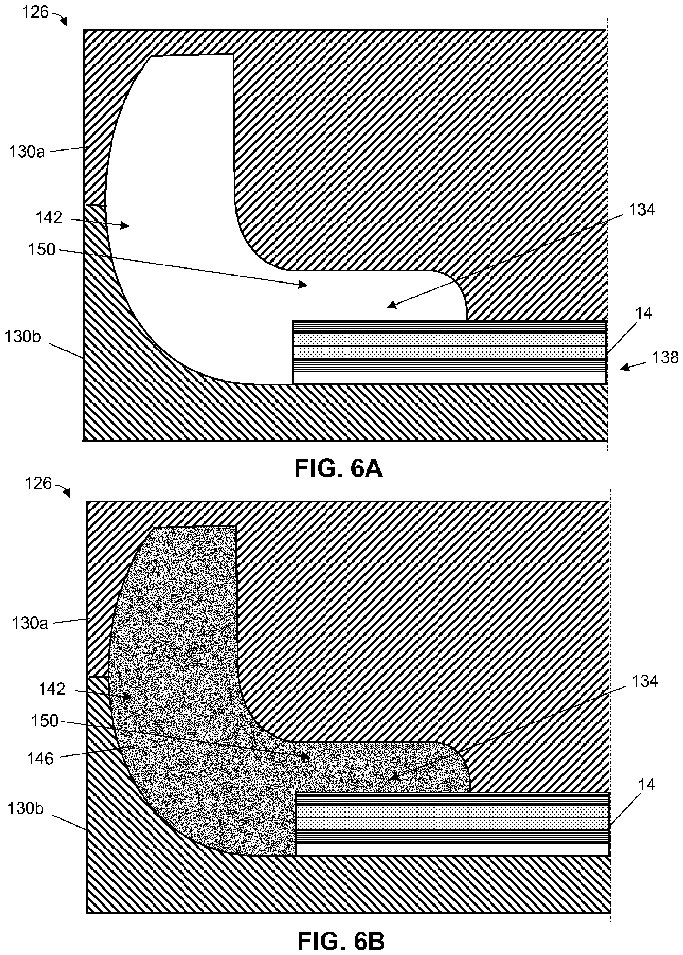

Referring to FIGs. 6A and 6B, some of the present portable electronic device housings (e.g., 10) can be manufactured via injection molding. Manufacturing can be performed using a mold (e.g., 126) comprising two or more mold portions (e.g., 130a and 130b) that are movable between an open position and a closed position in which the mold portions cooperate to define a mold cavity (e.g., 134). Molding surfaces of the mold portions can be shaped such that the mold cavity comprises a planar cavity portion (e.g., 138) and a peripheral channel (e.g., 142) that extends outwardly of and surrounds at least a majority (e.g., substantially all of) the planar cavity portion. The planar cavity portion can be configured to receive the asymmetric laminate plate, optionally such that the plate occupies substantially all of a volume defined by the planar cavity portion. The mold cavity can be configured such that a portion of the laminate (e.g., at least the edge (e.g., 30) thereof) can be disposed within the peripheral channel when the laminate is received in the planar cavity portion.

To form the housing, some methods comprise a step of disposing the laminate plate within the mold (e.g., such that the laminate is received in the planar cavity portion) (FIG. 6A). As shown, the front major surface and/or back major surface of the laminate may be disposed on a molding surface of at least one of the mold portions. A polymeric material (e.g., 146) (e.g., polycarbonate) that can comprise or be free of a plurality of fibers can be injected into the mold (FIG. 6B). For example, injecting can be performed such that the polymeric material is introduced into a volume (e.g., 150) defined by at least a portion of the molding surfaces and the laminate; the volume can, but need not, include at least a portion of the volume defined by the planar cavity portion. The polymeric material can set to form a polymeric body (e.g., 34) (e.g., that has one or more pieces) that is connected to the laminate plate such that the body extends outwardly of the back major surface of the laminate and is disposed along at least a majority (up to and including all of) a periphery of the laminate. At least in part because the laminate is partially disposed in the peripheral channel, at least a portion of the polymeric body can be disposed on the back major surface and/or edge of the laminate; in some instances, the polymeric body can be formed such that it contacts the front major surface, whether or not it contacts the back major surface and/or edge.

A rim that comprises a metal and/or a laminate can, but need not, be disposed within the mold (e.g., such that the rim is received in the peripheral channel) and injecting the polymeric material can be performed such that the polymeric body couples the rim to the laminate. However, inclusion of such a rim is optional.

Prior to and/or during the injecting, the polymeric material and/or laminate can be heated (e.g., to facilitate bonding and the flow of the polymeric material). For example, the polymeric material and/or the laminate can be heated such that the polymeric material and/or laminate reach a temperature that is greater than or equal to any one of, or between any two of, 80 °C, 90 °C, 100 °C, 110 °C, 120 °C, 130 °C, 140 °C, 150 °C, 160 °C, 170 °C, or higher. The polymeric material can be set at least by cooling (e.g., passively or actively) the polymeric material and/or laminate such that the polymeric material and/or laminate reach a temperature that is less than or equal to any one of or between any two of 50 °C, 45 °C, 40 °C, 35 °C, 30 °C, 25 °C, 20 °C, 15 °C, or lower (e.g., between 20 and 30 °C, which can be room temperature). As described above, the asymmetry of the laminate can mitigate warpage as the polymeric material and/or laminate are cooled such that the laminate can remain flat.

## EXAMPLES

The present invention will be described in greater detail by way of specific examples. The following examples are offered for illustrative purposes only and are not intended to limit the invention in any manner. Those of skill in the art will readily recognize a variety of noncritical parameters that can be changed or modified to yield essentially the same results.

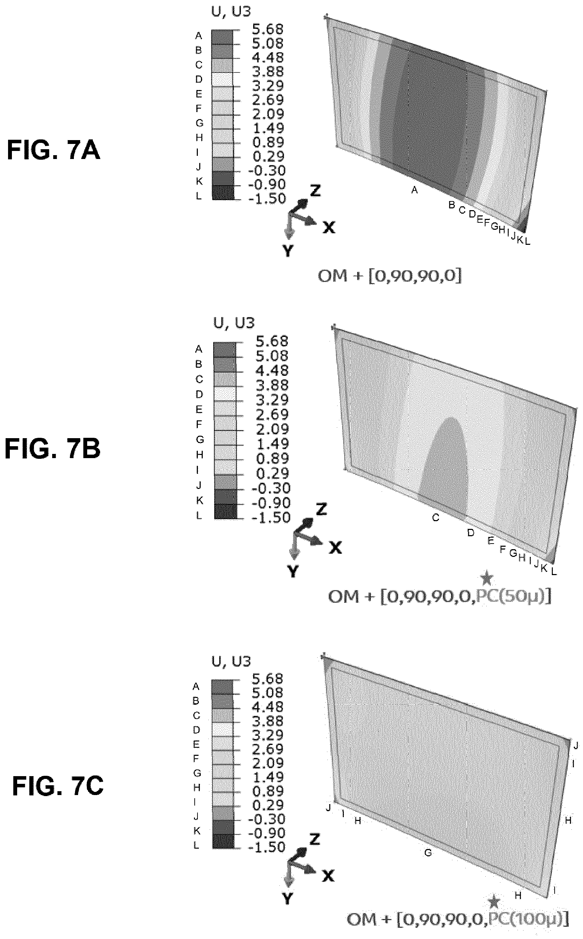

Referring to FIGs. 7A-7C, a finite element analysis was performed to predict the amount of warpage that may result when molding a polymeric body of a sidewall onto a laminate. Three analyses were performed. For each, the laminate was modeled as a plate having a length of 300 mm, a width of 200 mm, and a thickness of 1 mm and the sidewall was modeled as a 10 mm-thick polymeric body that is disposed along all of the periphery of the plate, was positioned on a back major surface of the plate, and had a height of 1 mm. The laminate modeled in the first analysis (FIG. 7A) was symmetric and the laminates modeled in the second and third analyses (FIGs. 7B and 7C, respectively) were not. Particularly, in the first analysis the modeled laminate had four unidirectional laminae, each 250 $\mu$m thick, arranged in a 0°, 90°, 90°, 0° layup. In each of the second and third analyses the modeled laminate had four unidirectional laminae, each 250 $\mu$m thick, and a fiberless polycarbonate (PC) lamina defining a front major surface of the plate, the laminae arranged in a 0°, 90°, 90°, 0°, PC layup. In the second analysis the thickness of the PC lamina was modeled as 50 $\mu$m and in the third analysis the thickness of the PC lamina was modeled as 100 $\mu$m.

TABLE 1 sets forth the material properties of the modeled unidirectional laminae, PC lamina, and polymeric body:

**TABLE 1: Material Properties in Deflection Analyses**

| | Fiber Volume Fraction (%) | Fiber Modulus (GPa) | $E_1$ (GPa) | $E_2$ (GPa) | $\nu$ | $G_{12}$ (MPa) | Density (g/cm³) | $\alpha_1$ | $\alpha_2 = \alpha_3$ |
|---|---|---|---|---|---|---|---|---|---|
| UD Laminae | 50% | 240 | 111.5 | 5.6 | 0.29 | 2.3 | 1.4 | 2e-6 | 30e-6 |
| PC Lamina | - | - | 2.3 | | 0.38 | 0.8 | 1.2 | 50e-6 | |
| Polymeric Body | - | - | 7.0 | | 0.39 | 2.5 | 1.5 | 20e-6 | |

For each of the analyses out-of-plane deflection, with the laminate corners being fixed, was calculated for a simulated cooling in which the temperature of the laminate and polymeric body decreased from 120 °C to 25 °C. In the first analysis-where the laminate was modeled as symmetric-the maximum deflection calculated was approximately 5 mm (FIG. 7A). In the second and third analyses-where the laminate was modeled as asymmetric-the maximum deflection calculated was approximately 4 mm and 2 mm, respectively (FIGs. 7B and 7C). As shown, the laminate modeled in the third analysis, which had the thicker PC lamina (100 μm), had the smallest maximum calculated deflection.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A portable electronic device housing comprising:

   a plate defining:

      a front major surface;
      a back major surface opposite the front major surface; and
      a periphery;
      wherein the plate is formed of an asymmetric laminate comprising two or more laminae, at least one of the laminae including a plurality of fibers dispersed within a polymeric matrix material; and

   a sidewall comprising a polymeric body coupled to the plate with the polymeric body disposed along at least a majority of the periphery of the plate and extending away from the back major surface of the plate in a direction opposite the front major surface of the plate.

2. The housing of claim 1, wherein:

   the two or more laminae include:

      one or more first laminae, wherein at least 90%, by weight, of each of the first lamina(e) is a polymeric matrix material; and
      one or more second laminae, each comprising a plurality of fibers dispersed within a polymeric matrix material; and

   one of the first lamina(e) defines the front major surface of the plate.

3. The housing of claim 2, wherein:

   the one or more first laminae are a single first lamina; and
   the lamina(e) that are disposed between the first lamina and the back major surface of the plate are the second lamina(e).

4. The housing of claim 2 or 3, wherein a thickness of each of the first lamina(e) is greater than or equal to 50 μm.

5. The housing of any of claims 2-4, wherein the polymeric matrix material of each of the first lamina(e) comprises polycarbonate.

6. The housing of any of claims 1-5, wherein the laminate has a width and a length and:

an effective lengthwise coefficient of thermal expansion (CTE) of the laminate is higher at the front major surface than at the back major surface;
an effective widthwise CTE of the laminate is higher at the front major surface than at the back major surface; and/or
an effective shear CTE of the laminate is higher at the front major surface than at the back major surface.

7. The housing of claim 6, wherein:

an effective lengthwise CTE of the laminate is higher at the front major surface than at the back major surface;
an effective widthwise CTE of the laminate is higher at the front major surface than at the back major surface; and
an effective shear CTE of the laminate is substantially the same at the front and back major surfaces.

8. The housing of any of claims 1-7, wherein the portable electronic device housing is a laptop A cover.

9. A method of making a portable electronic device housing, the method comprising:

disposing a plate within a mold, the plate including:

a front major surface;
a back major surface opposite the front major surface; and
a periphery;
wherein the plate is formed of an asymmetric laminate comprising two or more laminae, at least one of the laminae including a plurality of fibers dispersed within a polymeric matrix material; and

injecting a polymeric material into the mold such that the polymeric material defines a body coupled to the plate with the body disposed along at least a majority of the periphery of the plate and extending away from the back major surface of the plate in a direction opposite the front major surface of the plate.

10. The method of claim 9, wherein:

the two or more laminae include:

one or more first laminae, wherein at least 90%, by weight, of each of the first lamina(e) is a polymeric matrix material; and
one or more second laminae, each comprising a plurality of fibers dispersed within a polymeric matrix material; and

one of the first lamina(e) defines the front major surface of the plate.

11. The method of claim 10, wherein:

the one or more first laminae are a single first lamina; and
the lamina(e) that are disposed between the first lamina and the back major surface of the plate are the second lamina(e).

12. The method of claim 10 or 11, wherein a thickness of each of the first lamina(e) is greater than or equal to 50 $\mu$m.

13. The method of any of claims 10-12, wherein the polymeric matrix material of each of the first lamina(e) comprises polycarbonate.

14. The method of any of claims 9-13, wherein the laminate has a width and a length and:

an effective lengthwise CTE of the laminate is higher at the front major surface than at the back major surface;
an effective widthwise CTE of the laminate is higher at the front major surface than at the back major surface;

and/or
an effective shear CTE of the laminate is higher at the front major surface than at the back major surface.

15. The method of claim 14, wherein:

an effective lengthwise CTE of the laminate is higher at the front major surface than at the back major surface;
an effective widthwise CTE of the laminate is higher at the front major surface than at the back major surface; and
an effective shear CTE of the laminate is substantially the same at the front and back major surfaces.

FIG. 1A

FIG. 1B

EP 3 750 706 A1

FIG. 1C

70

62a

62b

66

58

38b

38b

38a

22

30

38b

26

14

56

34

60

18

38a 38b 38b 38b 38b

22

26

46 46 46 46 46

42 42 42 42

14

**FIG. 2**

EP 3 750 706 A1

**FIG. 3**

FIG. 4

38a

40

22

38b

38b

38b

38b

26

## FIG. 5A

22

98a

40

26

98b

102

## FIG. 5B

FIG. 5C

**FIG. 6A**

**FIG. 6B**

**FIG. 7A**

U, U3

| | |
|---|---|
| A | 5.68 |
| B | 5.08 |
| C | 4.48 |
| D | 3.88 |
| | 3.29 |
| E | 2.69 |
| F | 2.09 |
| G | 1.49 |
| H | 0.89 |
| I | 0.29 |
| J | -0.30 |
| K | -0.90 |
| L | -1.50 |

OM + [0,90,90,0]

**FIG. 7B**

U, U3

| | |
|---|---|
| A | 5.68 |
| B | 5.08 |
| C | 4.48 |
| D | 3.88 |
| | 3.29 |
| E | 2.69 |
| F | 2.09 |
| G | 1.49 |
| H | 0.89 |
| I | 0.29 |
| J | -0.30 |
| K | -0.90 |
| L | -1.50 |

OM + [0,90,90,0,PC(50µ)]

**FIG. 7C**

U, U3

| | |
|---|---|
| A | 5.68 |
| B | 5.08 |
| C | 4.48 |
| D | 3.88 |
| | 3.29 |
| E | 2.69 |
| F | 2.09 |
| G | 1.49 |
| H | 0.89 |
| I | 0.29 |
| J | -0.30 |
| K | -0.90 |
| L | -1.50 |

OM + [0,90,90,0,PC(100µ)]

24

Europäisches
Patentamt

European
Patent Office

Office européen
des brevets

## EUROPEAN SEARCH REPORT

Application Number

EP 19 17 9260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/203479 A1 (LAURIN MICHAEL M [US] ET AL) 20 July 2017 (2017-07-20) | 1,6,8,9, 14 | INV. |
| A | * paragraph [0003] - paragraph [0015] * | 2-5,7, | B32B7/027 |
| | * paragraph [0017] - paragraph [0020] * | 10-13,15 | B29C70/20 |
| | * paragraph [0030] - paragraph [0036] * | | B32B27/36 |
| | * paragraph [0059] * | | B32B3/08 |
| | * paragraph [0080] - paragraph [0085] * | | B32B3/12 |
| | ----- | | B32B5/12 |
| X | WO 2018/172918 A1 (SABIC GLOBAL TECHNOLOGIES BV [NL]) 27 September 2018 (2018-09-27) | 1,6,8,9, 14 | B32B5/26 H05K5/00 |
| A | * paragraph [0026] * | 2-5,7, | |
| | * paragraph [0032] - paragraph [0036] * | 10-13,15 | |
| | * paragraph [0052] - paragraph [0053] * | | |
| | * paragraph [0059] * | | |
| | ----- | | |
| A | JP 5 590180 B2 (FUJITSU LTD) 17 September 2014 (2014-09-17) | 1-15 | |
| | * paragraph [0014] - paragraph [0018] * | | |
| | * paragraph [0019] - paragraph [0022] * | | |
| | * paragraph [0026] * | | |
| | ----- | | |

| | | | TECHNICAL FIELDS SEARCHED (IPC) |
|---|---|---|---|
| | | | B32B B29C H05K |

The present search report has been drawn up for all claims

| Place of search | Date of completion of the search | Examiner |
|---|---|---|
| The Hague | 23 October 2019 | Sanchez Perucha, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 19 17 9260

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2019

| Patent document cited in search report | | | Publication date | Patent family member(s) | | | Publication date |
|---|---|---|---|---|---|---|---|
| US 2017203479 | A1 | | 20-07-2017 | CN | 106660242 | A | 10-05-2017 |
| | | | | EP | 3166786 | A1 | 17-05-2017 |
| | | | | US | 2017203479 | A1 | 20-07-2017 |
| | | | | WO | 2016007743 | A1 | 14-01-2016 |
| WO 2018172918 | A1 | | 27-09-2018 | NONE | | | |
| JP 5590180 | B2 | | 17-09-2014 | JP | 5590180 | B2 | 17-09-2014 |
| | | | | JP | 2013179315 | A | 09-09-2013 |

EPO FORM P0459

For more details about this annex : see Official Journal of the European Patent Office, No. 12/82